# EUROPÄISCHE PATENTANMELDUNG

(11) **EP 2 399 447 A2**
(43) Veröffentlichungstag der Anmeldung: **28.12.2011**
(21) Anmeldenummer: 11003474.1
(22) Anmeldetag: 28.04.2011
(51) Int. Cl.: A01D 90/10, A01F 15/07, A01F 15/08

(54) **Verfahren zur Aufbereitung, Konditionierung, Abpackung und/oder Lagerung von Material**

(30) Priorität: 23.06.2010 DE 102010024754
(71) Anmelder: Unseld, Siegfried, 89129 Langenau (DE)
(72) Erfinder: Unseld, Siegfried, 89129 Langenau (DE)
(74) Vertreter: Dziewior, Joachim

(57) **Zusammenfassung**

Das Verfahren dient zur Aufbereitung, Konditionierung, Abpackung und/oder Lagerung von gesammeltem oder aufgenommenem Material für den anschließenden Transport zum Ort einer weiteren Verwertung. Dabei wird das Material zunächst auf eine vorgegebene Materialgröße zerkleinert, anschließend einer Rundballenpresse (2) zugeführt und darin zu Rundballen (3) verpreßt. Abschließend wird der Rundballen, sich noch in der Presskammer befindend, durch ein in die Kammer einlaufendes Umhüllungsmaterial am Umfang umwickelt und nach dem Auswurf aus der Preßkammer zusätzlich in Wickelachsrichtung über den Umfang und die Stirnseite komplett umwickelt. Schließlich werden die mit horizontal verlaufender Wickelachse (4) lagernden Rundballen (3) über eine Abladekippeinrichtung (6) mit vertikal ausgerichteter Wickelachse (4) für einen späteren Weitertransport abgesetzt.

## Beschreibung

Die Erfindung betrifft ein Verfahren zur Aufbereitung, Konditionierung, Abpackung und/oder Lagerung von gesammeltem oder aufgenommenem Material für den anschließenden Transport zum Ort einer weiteren Verwertung. Ferner betrifft die Erfindung eine Vorrichtung zur Durchführung des Verfahrens.

Aus der Landwirtschaft ist es bereits bekannt, Kleinmaterial insbesondere in Form von Halmgütern unter Einsatz von Rundballenpressen zu verdichten, um diese dann effizient mit kleinem Volumen transportieren und lagern zu können.

Zahlreiche andere Materialien werden dem gegenüber nach wie vor in konventioneller Weise gesammelt und transportiert, was in der Regel - wegen mangelnder Verdichtung - zu großen Transportvolumina sowie erschwerten Lagerungsbedingungen führt, da diese gesammelten Materialien in meist speziellen Behältnissen zwischengelagert werden müssen.

Es ist daher Aufgabe der vorliegenden Erfindung, ein Verfahren aufzuzeigen, mit welchem auch andere als landwirtschaftliche Produkte in geeigneter Weise für einen vereinfachten Transport sowie eine spätere Zwischenlagerung aufbereitet werden können.

Ein diese Aufgabe lösendes Verfahren ist dadurch gekennzeichnet, dass das Material zunächst auf eine vorgegebene Materialgröße zerkleinert wird, daß das Material anschließend einer Rundballenpresse zugeführt und darin zu Rundballen verpreßt, sodann umfangsseitig mit einer Umhüllung versehen und anschließend aus der Rundballenpresse ausgeworfen wird, daß weiter der Rundballen zusätzlich in Wickelachsrichtung horizontal über den Umfang und sternförmig über die Stirnseite vollständig mit der Umhüllung umwickelt und mit horizontal ausgerichteter Wickelachse zwischengelagert oder auf eine Sammeleinrichtung verladen wird, und daß schließlich die mit horizontal verlaufender Wickelachse lagernden Rundballen anschließend über eine Abladekippeinrichtung mit vertikal ausgerichteter Wickelachse für einen späteren Weitertransport abgesetzt werden.

Der durch die Erfindung erreichte Vorteil besteht im Wesentlichen darin, dass das zu transportierende Material nach einer geeigneten Zerkleinerung im verpressten Zustand mit minimalem Volumen bereit gestellt wird, wobei durch die einfache Umhüllung der entstehenden Rundballen keine besonderen Transportbehältnisse erforderlich sind. Dies macht insbesondere einen Rücktransport solcher Transportbehältnisse überflüssig. Darüber hinaus kann das derart aufbereitete Material in der Regel unmittelbar einer Weiterverarbeitung zugeführt werden, ohne dass hierfür die schon angesprochenen Transportbehältnisse entleert werden müssten.

In bevorzugter Ausführungsform der Erfindung ist weiter vorgesehen, dass die Umhüllung mittels eines Netzes oder einer Folie erfolgt. Die Auswahl dieses Materials kann im Übrigen auch davon abhängig gemacht werden, in welcher Weise eine Weiterverarbeitung des Materials erfolgt.

Es hat sich ferner als vorteilhaft erwiesen, wenn jeweils vier Rundballen in im Wesentlichen quadratischer Anordnung zueinander mit horizontaler Wickelachse gestapelt und gemeinsam gekippt sowie abgesetzt werden. Auf diese Weise entsteht eine Packungseinheit von einer optimalen, gleichwohl noch gut zu handhabenden Größe.

In diesem Sinne empfiehlt es sich weiter, dass axial jeweils mehrere, vorzugsweise zwei bis vier Rundballen stirnseitig aneinander liegend angeordnet und abgesetzt werden.

Um den späteren Weitertransport von derart abgesetzten Rundballen zu erleichtern, empfiehlt es sich, dass vor dem Kippen und Absetzen der Rundballen bereits von der Beladung der Sammeleinrichtung deren heckseitiger Abschluss, der als Gabel ausgebildet ist, mit der Palette bestückt wird, gegen die die Ballen zum Liegen kommen. Hierbei kann es sich um eine einzige Palette geeigneter Größe handeln; ebenso ist es jedoch auch möglich, beispielsweise vier Paletten in quadratischer Anordnung vorzusehen, die dann ggf. über geeignete Maßnahmen miteinander verbunden sein können. Dadurch wird die spätere Wiederaufnahme der so palletierten Rundballen wesentlich erleichtert.

In vorrichtungsmäßiger Hinsicht wird die Erfindung gelöst durch eine Vorrichtung, die gekennzeichnet ist durch eine Zerkleinerungseinrichtung für vorzugsweise zu entsorgendes Material in Form eines Schredders oder dergleichen, ferner eine Rundballenpresse zum Verdichten und Verpressen des zerkleinerten Materials und dessen Umhüllung, weiter einer Sammeleinrichtung für die fertigen Rundballen samt der Abladevorrichtung, die die zunächst mit horizontaler Wickelachse gelagerten Rundballen mit vertikaler Wickelachse an festen Lagerorten absetzt.

Um hierbei die Rundballen in die geeignete Anordnung zum späteren Absetzen zu bringen, ist es zweckmäßig, wenn die Breite der Sammeleinrichtung sowie die Höhe deren seitlicher Begrenzungswände etwa dem Durchmesser zweier Rundballen entspricht. Auf diese Weise können jeweils zwei Rundballen neben- und übereinander in etwa quadratischer Anordnung gestapelt und in dieser Form später abgesetzt werden.

Entsprechend sollte die Länge der Sammeleinrichtung der axialen Länge von wenigstens zwei, vorzugsweise vier Rundballen entsprechen.

Um das Stapeln der Rundballen in der Sammeleinrichtung zu erleichtern, sieht die Erfindung vor, dass die seitlichen Begrenzungswände geringfügig schräg, den Laderaum nach oben verbreiternd angeordnet sind. Hierdurch werden insbesondere auch Beschädigungen der Rundballen beim Aufladen an den oberen Kanten der Begrenzungswände verhindert.

Im Übrigen kann auch vorgesehen sein, dass die seitlichen Begrenzungswände in ihrem Abstand und in ihrer Neigung verstellbar ausgebildet sind; hierdurch ist eine ggf. wünschenswerte Anpassung der Sammeleinrichtung auch an unterschiedliche Durchmesser der Rundballen möglich.

Um das Sammeln der Materialien an wechselnden Orten zu erleichtern, empfiehlt es sich, dass die Zerkleinerungseinrichtung sowie die Rundballenpresse auf einem LKW angeordnet ist.

Um zu vermeiden, jeden fertig gewickelten Rundballen zum späteren Lagerort transportieren zu müssen, um anschließend wieder das Einsammeln der Materialien fortzusetzen, empfiehlt es sich, dass zusätzlich die Sammeleinrichtung sowie die Abladevorrichtung gemeinsam mit der Zerkleinerungseinrichtung und der Rundballenpresse auf dem LKW oder ggf. getrennt auf einem Anhänger angeordnet ist. Somit besteht die Möglichkeit, zunächst einige der Rundballen mitzuführen, bis diese dann gemeinsam an beliebigen oder auch speziell ausgewählten Sammelorten derart abgestellt werden können, dass sie von geeigneten, allein auf dem Transport von Gütern ausgerichteten Fahrzeugen abgeholt werden können.

Weiter kann die Sammeleinrichtung als Kippmodul für einen Abrollkipper mit geeignetem Hakenlift ausgebildet sein. Durch die Verwendung eines Hakenlift-Abrollkippers kann dieser auch in Verbindung mit anderen Aufbauten als der Sammeleinrichtung genutzt werden.

Es besteht jedoch auch die Möglichkeit, dass die Sammeleinrichtung mit einem fixen Drehpunkt dem Fahrgestell zugeordnet ist und mit einer geeigneten Kippmechanik, die sich am Fahrgestell befindet, um diesen Kipppunkt bewegt wird. Dabei kann der mit Kippmechanik ausgestattete Grundaufbau des Fahrzeugs einfach übernommen werden. Die Ablaufrollen werden durch Drehlager ersetzt, über die dann die Sammeleinheit kippbar mit dem Fahrgestell verbunden wird. Der Drehpunkt wird so gewählt, dass die Sammeleinheit bzw. die Palette, wie zuvor beschrieben, auf dem Boden zum Stehen kommt.

Im folgenden wird die Erfindung an in der Zeichnung dargestellten Ausführungsbeispielen näher erläutert; es zeigen
- Fig. 1: eine schematische Darstellung eines Fahrzeugs zum Zerkleinern von gesammeltem Material - hier in Form von Müll - und anschließendem Verpressen zu Rundballen,
- Fig. 2: ein diese Rundballen aufnehmendes Fahrzeug, das die Rundballen geeignet, d. h. mit der Stirnseite gegen die heckseitige Palette ausgerichtet, gestapelt und mit einer Umgurtung versehen hat,

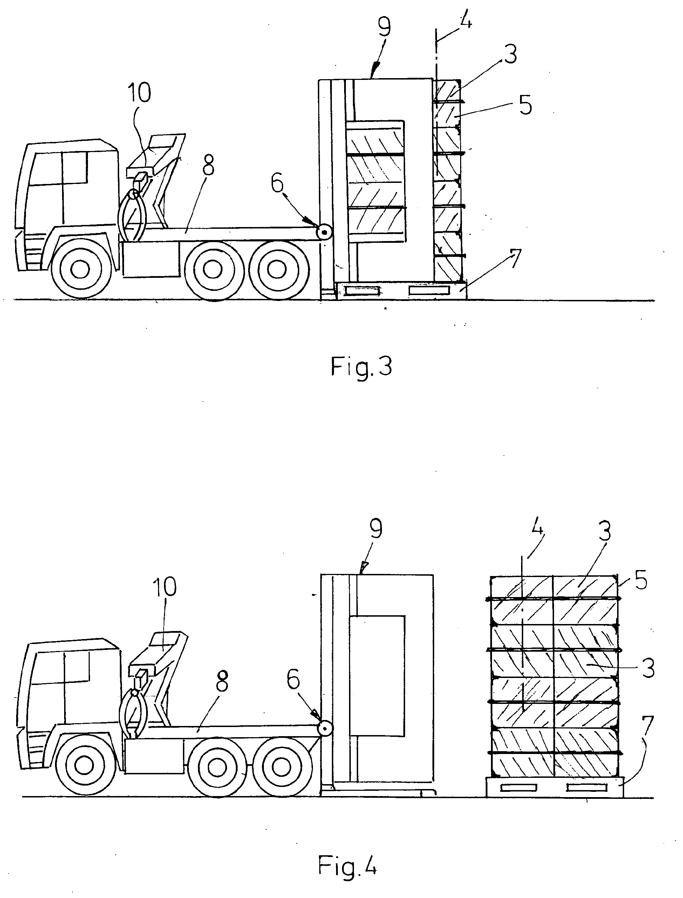

- Fig. 3: das Fahrzeug nach Fig. 2 beim Absetzen der gegen die Palette angeordneten Rundballen nach deren Kippen,
- Fig. 4: das Fahrzeug nach Fig. 3 nach dem Absetzen der auf Palette im Viererblock verzurrten, stehenden Rundballen,
- Fig. 5: eine Rückansicht des Fahrzeugs nach den Fig. 2 bis 4 bzw. eines Anhängers nach Fig. 6,
- Fig. 6: eine Sammeleinrichtung ausgebildet als Anhänger.

Das in der Zeichnung teilweise nur schematisch dargestellte Verfahren dient der Aufbereitung, Konditionierung, Abpackung und/oder der Lagerung von gesammeltem oder aufgenommenem Material für den anschließenden Transport zu einem Ort, an welchem eine weitere Verwertung dieses Materials erfolgen soll.

Im Einzelnen kann dieses Verfahren beispielsweise zum Müllsammeln eingesetzt werden; ebenso ist jedoch auch ein Einsatz im Wald zur Aufnahme von Brennholz in Form von Holzhackschnitzeln denkbar. Auch kann ein erweiterter Einsatz in der Landwirtschaft, etwa bei der Maisernte, in Betracht kommen, wobei dann die Zerkleinerungseinrichtung Teil eines Maishäckslers ist.

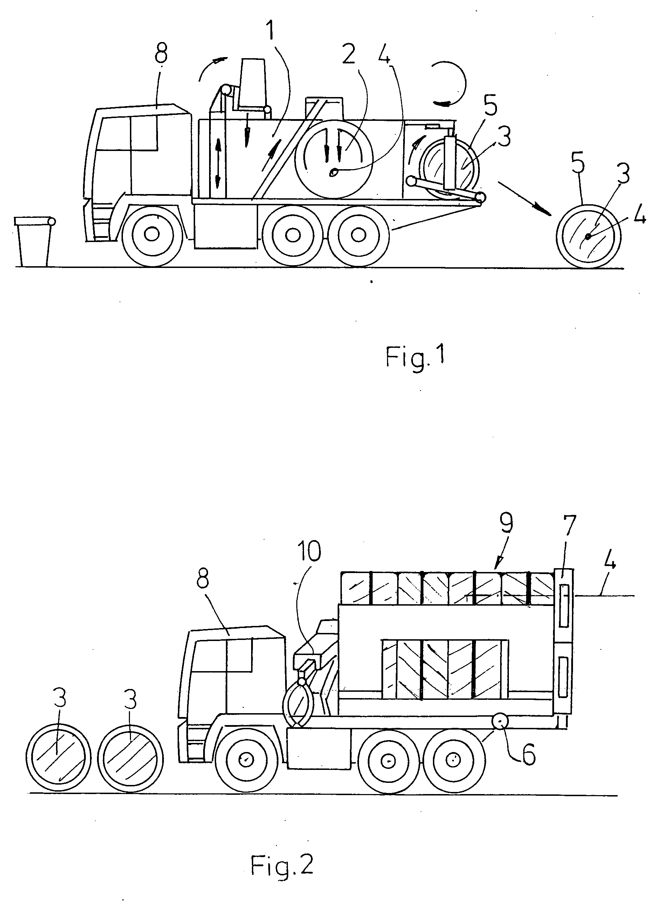

Unabhängig von den einzelnen Anwendungsfällen wird hierbei das in Fig. 1 aus einem Müllbehälter stammende Material zunächst in einer Zerkleinerungseinrichtung 1 auf eine vorgegebene Materialgröße zerkleinert und dieses Material anschließend einer Rundballenpresse 2 zugeführt, in welcher das Material rotierend zu verdichteten Rundballen 3 aufgewickelt bzw. verpresst wird.

Dieser Vorgang erfolgt üblicherweise mit horizontal ausgerichteter Wickelachse 4 der Rundballen 3, so dass diese in dieser Form zunächst noch in der Presskammer durch ein einlaufendes Umhüllungsmaterial 5 am Umfang umwickelt werden kann. Nach dem Auswurf aus der Presskammer erfolgt die weitere Umhüllung, die auch die Stirnseiten umfasst. Diese Umhüllung 5 ist insbesondere auf das Material in den Rundballen 3 sowie die spätere Weiterverwertung abzustimmen; üblicherweise wird man für diese Umhüllung 5 ein Netz oder eine Folie aus geeignetem Material verwenden.

Nach entsprechender Stapelung der Rundballen 3 in einer Sammeleinrichtung 9, jeweils in Schichten von vier Ballen, die sich am Umfang berühren, werden diese an den Mantelflächen mit einer Umgurtung versehen, so dass diese eine kompakte Einheit aus zum Beispiel vier aufeinander liegenden umgurteten Schichten bilden, worauf sie über eine Abladekippeinrichtung 6 mit dann vertikal ausgerichteten Wickelachse 4, auf einer Palette befindlich, für einen späteren Weitertransport an allgemeinen oder speziellen Zwischenlagerorten abgesetzt werden können.

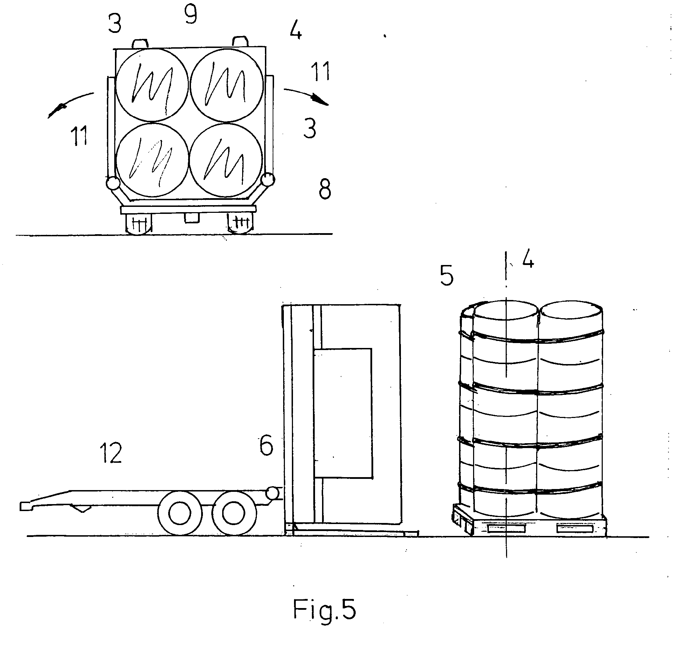

Es hat sich, wie aus Figur 5 zu ersehen ist, als zweckmäßig erwiesen, jeweils vier Rundballen 3 in im Wesentlichen quadratischer Anordnung zueinander mit horizontaler Wickelachse 4 zu stapeln, die einzelnen Schichten über ihren Umfang zu umgurten und mit erfolgter Umgurtung zu kippen und abzusetzen. Die Stapelhöhe der so abgesetzten Rundballen 3 kann auch von den Zwischenlagerorten sowie der Weiterverwertung abhängig gemacht werden; insbesondere spielt für die Höhe auch die Stapelbarkeit dieser Rundballen 3 eine Rolle. Üblicherweise wird man jedoch zwei bis vier Rundballen 3 übereinander stapeln.

Zum Kippen und Absetzen der Rundballen 3 empfiehlt es sich, heckseitig auf einer gabelförmigen Ausbildung der Sammeleinrichtung eine Palette 7 anzuordnen (oder auch mehrere nebeneinander und übereinander), die bei Abkippen dann die Basis am Boden bildet. Hierdurch wird die spätere Wiederaufnahme der Rundballen 3 - beispielsweise mittels eines Gabelstaplers oder einer Krangabel - in einfacher Weise ermöglicht.

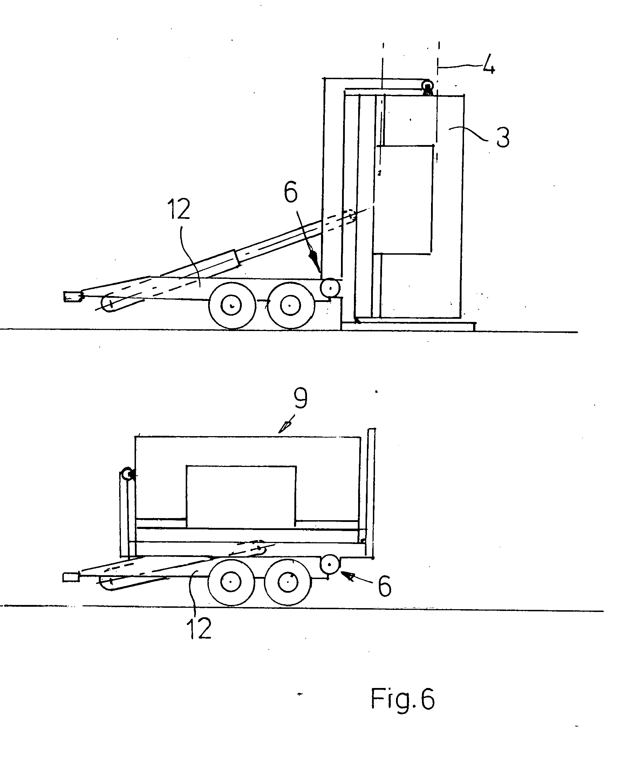

Die Zerkleinerungseinrichtung 1, die beispielsweise in Form eines Schredders ausgebildet sein kann, sowie die Rundballenpresse 2 sind zweckmäßigerweise auf einem LKW 8 angeordnet, um das Einsammeln des Materials - insbesondere bei Müll - zu erleichtern. Dabei kann die Sammeleinrichtung 9 sowie die Abladevorrichtung 6 entweder gemeinsam mit der Zerkleinerungseinrichtung 1 und der Rundballenpresse 2 auf dem LKW 8 angeordnet sein oder aber die Sammeleinrichtung befindet sich - wie in Fig. 6 - auf einem separaten Anhänger 12, der hier heckseitig mit einer Gabel 13 versehen ist. Hierbei besteht weiter die Möglichkeit, dass der LKW 8 den Anhänger 12 stets mit sich führt; ebenso ist es jedoch auch möglich, den Anhänger 12 dort abzustellen, wo eine Zwischenlagerung der Rundballen 3 erfolgen soll. In diesem Fall ist am LKW 8 zusätzlich ein Kran 10 oder dergleichen vorzusehen, mit welchem die Rundballen 3 in die Sammeleinrichtung 9 überführt werden können.

Um eine entsprechende Anordnung der Rundballen 3 für die Zwischenlagerung zu erreichen, empfiehlt es sich, dass die Breite der Sammeleinrichtung 9 sowie die Höhe deren seitlicher Begrenzungswände 11 etwa dem Durchmesser zweier Rundballen 3 entspricht, wie dies aus der Figur 5 zu ersehen ist. Entsprechend sollte auch die Länge der Sammeleinrichtung 9 der axialen Länge von wenigstens zwei, vorzugsweise jedoch vier Rundballen 3 entsprechen.

Um hier das Ablegen der Rundballen 3 zu erleichtern, ist es zweckmäßig, wenn die seitlichen Begrenzungswände - wie in Figur 5 zu sehen - geringfügig schräg, den Laderaum nach oben verbreiternd, angeordnet sind.

Um darüber hinaus die Möglichkeit zu haben, eine Anpassung an unterschiedliche Rundballendurchmesser vornehmen zu können, können die seitlichen Begrenzungswände 11 auch in in der Zeichnung nicht näher dargestellter Weise in ihrem Abstand und in ihrer Neigung verstellbar ausgebildet sein.

## Patentansprüche

1. Verfahren zur Aufbereitung, Konditionierung, Abpackung und/oder Lagerung von gesammeltem oder aufgenommenem Material für den anschließenden Transport zum Ort einer weiteren Verwertung, **dadurch gekennzeichnet, daß** das Material zunächst auf eine vorgegebene Materialgröße zerkleinert wird, daß das Material anschließend einer Rundballenpresse (2) zugeführt und darin zu Rundballen (3) verpreßt, sodann umfangsseitig mit einer Umhüllung (5) versehen und anschließend aus der Rundballenpresse (2) ausgeworfen wird, daß weiter der Rundballen (3) zusätzlich in Wickelachsrichtung horizontal über den Umfang uns sternförmig über die Stirnseite vollständig mit der Umhüllung (5) umwickelt und mit horizontal ausgerichteter Wickelachse (4) zwischengelagert oder auf eine Sammeleinrichtung verladen wird, und daß schließlich die mit horizontal verlaufender Wickelachse (4) lagernden Rundballen (3) anschließend über eine Abladekippeinrichtung (6) mit vertikal ausgerichteter Wickelachse (4) für einen späteren Weitertransport abgesetzt werden.

2. Verfahren nach Anspruch 1, **dadurch gekennzeichnet, daß** die Umhüllung (5) mittels eines Netzes oder einer Folie erfolgt.

3. Verfahren nach Anspruch 1 oder 2, **dadurch gekennzeichnet, daß** jeweils vier Rundballen (3) in im wesentlichen quadratischer Anordnung zueinander mit horizontaler Wickelachse (4) gestapelt und gemeinsam gekippt sowie abgesetzt werden.

4. Verfahren nach einem der Ansprüche 1 bis 3, **dadurch gekennzeichnet, daß** axial jeweils mehrere, vorzugsweise zwei bis vier Rundballen (3) stirnseitig aneinanderliegend angeordnet und abgesetzt werden.

5. Verfahren nach einem der Ansprüche 1 bis 4, **dadurch gekennzeichnet, daß** vor dem Kippen und Absetzen der Rundballen (3) bereits vor der Beladung der Sammeleinrichtung deren heckseitiger Abschluss, der als Gabel ausgebildet ist, mit einer Palette bestückt wird, gegen die die Ballen zum Liegen kommen.

6. Vorrichtung zur Durchführung des Verfahrens nach den Ansprüchen 1 bis 5, **gekennzeichnet durch** eine Zerkleinerungseinrichtung (1) für vorzugsweise zu entsorgendes Material in Form eines Schredders oder dergleichen, ferner einer Rundballenpresse (2) zum Verdichten und Verpressen des zerkleinerten Materials und dessen Umhüllung weiter einer Sammeleinrichtung (9) für die fertigen Rundballen (3) samt der Abladevorrichtung (6), die die zunächst mit horizontaler Wickelachse (4) gelagerten Rundballen (3) mit vertikaler Wickelachse (4) an festen Lagerorten absetzt.

7. Vorrichtung nach Anspruch 6, **dadurch gekennzeichnet, daß** die Breite der Sammeleinrichtung (9) sowie die Höhe deren seitlicher Begrenzungswände (11) etwa dem Durchmesser zweier Rundballen (3) entspricht.

8. Vorrichtung nach Anspruch 6 oder 7, **dadurch gekennzeichnet, daß** die Länge der Sammeleinrichtung (9) der axialen Länge von wenigstens zwei, vorzugsweise vier Rundballen (3) entspricht.

9. Vorrichtung nach einem der Ansprüche 6 bis 8, **dadurch gekennzeichnet, daß** die seitlichen Begrenzungswände (11) geringfügig schräg, den Laderaum nach oben verbreiternd angeordnet sind.

10. Vorrichtung nach einem der Ansprüche 6 bis 9, **dadurch gekennzeichnet, daß** die seitlichen Begrenzungswände (11) in ihrem Abstand und in ihrer Neigung verstellbar ausgebildet sind.

11. Vorrichtung nach einem der Ansprüche 6 bis 10, **dadurch gekennzeichnet, daß** die Zerkleinerungseinrichtung (1) sowie die Rundballenpresse (2) auf einem LKW (8) angeordnet ist.

12. Vorrichtung nach einem der Ansprüche 6 bis 11, **dadurch gekennzeichnet, daß** die Sammeleinrichtung (9) sowie die Abladevorrichtung (6) gemeinsam mit der Zerkleinerungseinrichtung (1) und der Rundballenpresse (2) auf einem LKW (8) oder getrennt auf einem Anhänger angeordnet ist.

13. Vorrichtung nach einem der Ansprüche 6 bis 12, **dadurch gekennzeichnet, dass** die Sammeleinrichtung als Kippmodul für einen Abrollkipper mit geeignetem Hakenlift ausgebildet ist.

14. Vorrichtung nach einem der Ansprüche 6 bis 12, **dadurch gekennzeichnet, dass** die Sammeleinrichtung mit einem fixen Drehpunkt dem Fahrgestell zugeordnet ist und mit einer geeigneten Kippmechanik, die sich am Fahrgestell befindet, um diesen Kipppunkt bewegt.
